# EUROPÄISCHE PATENTSCHRIFT

(11) **EP 2 993 111 B1**
(45) Veröffentlichungstag und Bekanntmachung des Hinweises auf die Patenterteilung: **26.12.2018**
(21) Anmeldenummer: 15177803.2
(22) Anmeldetag: 22.07.2015
(51) Int. Cl.: B62D 15/02, B60R 1/00, G08G 1/16, B60T 8/172

(54) **VERFAHREN ZUM UNTERSTÜTZEN EINES FAHRERS EINES KRAFTFAHRZEUGS BEIM EINPARKEN, FAHRERASSISTENZSYSTEM SOWIE KRAFTFAHRZEUG**
METHOD FOR SUPPORTING A DRIVER WHEN PARKING A MOTOR VEHICLE, DRIVER ASSISTANCE SYSTEM AND MOTOR VEHICLE
PROCÉDÉ D'ASSISTANCE D'UN CONDUCTEUR LORS DU STATIONNEMENT D'UN VÉHICULE AUTOMOBILE, SYSTÈME D'ASSISTANCE DE CONDUCTEUR ET VÉHICULE AUTOMOBILE

(30) Priorität: 31.07.2014 DE 102014110851
(43) Veröffentlichungstag der Anmeldung: 09.03.2016
(73) Patentinhaber: Valeo Schalter und Sensoren GmbH, 74321 Bietigheim-Bissingen (DE)
(72) Erfinder: Blinkle, Frank, 74321 Bietigheim-Bissingen (DE)

(56) Entgegenhaltungen:
- EP-A1- 2 011 699
- EP-A2- 1 270 367
- EP-A2- 2 147 826
- WO-A1-2009/044513
- DE-A1-102012 014 207
- US-A1- 2010 259 420

## Beschreibung

Die vorliegende Erfindung betrifft ein Verfahren zum Unterstützen eines Fahrers eines Kraftfahrzeugs beim Einparken, bei welchem das Kraftfahrzeug an einer Parklücke vorbeibewegt wird und während des Vorbeibewegens des Kraftfahrzeugs an der Parklücke Sensordaten zumindest eines Abstandssensors des Kraftfahrzeugs bereitgestellt werden, die Parklücke anhand der bereitgestellten Sensordaten vermessen wird und eine Startposition für einen Einparkvorgang in die Parklücke anhand der Vermessung der Parklücke ermittelt wird. Die Erfindung betrifft außerdem ein Fahrerassistenzsystem sowie ein Kraftfahrzeug.

Verfahren zum Unterstützen des Fahrers eines Kraftfahrzeugs beim Einparken bzw. sogenannte Parkhilfesysteme sind in vielfältiger Ausgestaltung aus dem Stand der Technik bekannt. Beispielsweise beschreibt die DE 10 2012 014 207 A1 eine Fahrerassistenzeinrichtung zum Durchführen eines vollautonomen Parkvorgangs. Die Fahrerassistenzeinrichtung umfasst eine Sensoreinrichtung zum Erfassen von Umgebungsinformationen und eine Steuereinrichtung, welche dazu ausgelegt ist, in Abhängigkeit von den Umgebungsinformationen eine Trajektorie für den Rangiervorgang im Voraus zu bestimmen. Darüber hinaus ist die Steuereinrichtung dazu ausgelegt, über eine Benutzerschnittstelle eine Benutzerinformation über das Ende des jeweils aktuellen, im Voraus bestimmten Rangierzuges auszugeben. Diese Benutzerinformation kann beispielsweise in Form eines Balkens ausgegeben werden. Die Benutzerinformation wird dem Fahrer während des Einparkvorgangs auf einer Anzeigeeinrichtung dargestellt.

Des Weiteren ist aus der DE 10 2010 034 142 A1 ein Verfahren zum Unterstützen eines Fahrers beim Führen eines Kraftfahrzeugs als bekannt zu entnehmen. Hierbei werden Informationen auf einer Anzeigeeinrichtung des Kraftfahrzeugs angezeigt, die auf Umgebungsinformationen beruhen. Auf der Anzeigeeinrichtung werden ein Fahrzeugsymbol, welches das Kraftfahrzeug symbolisiert und zumindest ein Objektsymbol, welches ein im Umgebungsbereich des Kraftfahrzeugs befindliches Objekt symbolisiert, angezeigt. Diese Information über das Kraftfahrzeug und das Objekt kann während der Vermessung der Parklücke mittels eines Abstandssensors angezeigt werden.

Ferner offenbart die EP 2 292 497 A2 ein Verfahren zum Durchführen eines zumindest semi-autonomen Parkvorgangs eines Kraftfahrzeugs mittels einer Fahrerassistenzeinrichtung. Dabei wird eine Parklücke durch eine Sensoreinrichtung der Fahrerassistenzeinrichtung während einer Vorbeifahrt des Kraftfahrzeugs an der Parklücke erfasst. Des Weiteren bestimmt eine Steuereinrichtung der Fahrerassistenzeinrichtung in Abhängigkeit von der erfassten Parklücke einen Bereich für eine Startposition für das Kraftfahrzeug, von welchem aus eine Parkbahn bestimmbar ist, die zumindest einem vorbestimmten Kriterium genügt. Die Startposition für das Kraftfahrzeug wird während der Vorbeifahrt des Kraftfahrzeugs an der Parklücke bestimmt. Die Steuereinrichtung gibt den Parkvorgang erst dann frei, wenn ein Referenzpunkt des Kraftwagens in den Bereich gelangt ist.
Darüber hinaus ist es aus dem Serienfahrzeugbau bekannt, vor der Detektion einer Parklücke die Suche der Parklücke auf einer Anzeigeeinrichtung des Kraftfahrzeugs entsprechend darstellen. Falls eine Parklücke detektiert wird, kann dies dem Fahrer entsprechend angezeigt werden. Weiterhin kann es dem Fahrer angezeigt werden, wenn ein Einparkvorgang möglich ist, also das Fahrzeug eine Startposition für den Einparkvorgang erreicht hat. In diesem Fall berechnet das Parkhilfesystem bzw. das Fahrerassistenzsystem also nach dem Detektieren bzw. Vermessen der Parklücke fortlaufend, ob ein Einparkvorgang möglich ist. Wenn die Startposition bzw. eine mögliche Einparktrajektorie für den Einparkvorgang gefunden wurde, wird dies dem Fahrer plötzlich angezeigt. Zudem kann es vorkommen, dass die Startposition für den Einparkvorgang erst in einer weiten Entfernung zu der Parklücke angezeigt wird. In diesem Fall weiß der Fahrer nicht wann der Einparkvorgang beginnt. Dies ist für den Fahrer und die Verkehrsteilnehmer, die sich hinter dem Fahrer befinden, unkomfortabel.

WO 2009/044513 A1 ist als nächstliegender Stand der Technik nach dem Oberbegriff des Anspruchs 1 zu sehen und offenbart einen Parkassistent mit: einer Vorrichtung zur Aufnahme der Umgebung; einem Parkzielpositionssteller zum Einstellen einer Parkzielposition in dem Umgebungsbild von der Vorrichtung zur Aufnahme der Umgebung; einem Rückwärtsbewegungs-Start-Positionsrechner zur Berechnung einer Rückwärtsbewegungs-Start-Position; und ein Bildgenerator zum Überlagern eines Informationsbildes auf ein Umgebungsbild. Das Informationsbild überlagert die Rückwärtsbewegungs-Start-Position zur Ermöglichung des Fahrzeugs zum Parken in die Zielposition.

Es ist Aufgabe der vorliegenden Erfindung, eine Lösung aufzuzeigen, wie ein Fahrer beim Einparken eines Kraftfahrzeugs in eine Parklücke zuverlässiger unterstützt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Unterstützen eines Fahrers eines Kraftfahrzeugs beim Einparken. Dabei wird das Kraftfahrzeug an einer Parklücke vorbeibewegt. Während des Vorbeibewegens des Kraftfahrzeugs an der Parklücke werden Sensordaten zumindest eines Abstandssensors des Kraftfahrzeugs bereitgestellt, die Parklücke wird anhand der bereitgestellten Sensordaten vermessen und eine Startposition für einen Einparkvorgang in die Parklücke wird anhand der Vermessung der Parklücke ermittelt. Des Weiteren wird während des Vorbeibewegens des Kraftfahrzeugs zumindest eine die Startposition beschreibende Information an den Fahrer ausgegeben, wobei eine Position des Kraftfahrzeugs während des Vorbeibewegens des Kraftfahrzeugs an der Parklücke fortlaufend ermittelt wird und ein Abstand zwischen der ermittelten Position des Kraftfahrzeugs und der ermittelten Startposition fortlaufend bestimmt wird, wobei als die zumindest eine Information die ermittelte Startposition und/oder der bestimmte Abstand an den Fahrer ausgegeben wird, wobei der bestimmte Abstand in Form einer Balkenanzeige auf einer Anzeigeeinrichtung (8) des Kraftfahrzeugs angezeigt wird . Dabei wird eine Parklückenart bestimmt, welche beschreibt, ob die Parklücke zum Längsparken oder zum Querparken vorgesehen ist, und die Startposition zusätzlich in Abhängigkeit von der bestimmten Parklückenart ermittelt wird.

Bei dem Verfahren wird das Kraftfahrzeug beispielsweise an einer Stellplatzreihe vorbeigefahren. Mittels des zumindest einen Abstandssensors wird die Stellplatzreihe kontinuierlich auf freie Parkplätze bzw. Parklücke überprüft. Falls eine Parklücke erkannt wurde, wird diese anhand der Sensordaten des Abstandssensors vermessen. Anhand der Sensordaten wird noch während des Vorbeifahrens des Kraftfahrzeugs an der Parklücke eine Startposition für den Einparkvorgang in die Einparklücke ermittelt. Dabei kann der Startpunkt zusätzlich anhand der Abmessungen des Kraftfahrzeugs, die beispielsweise in einer Speichereinrichtung hinterlegt sind, bestimmt werden. Anhand der gespeicherten Abmessungen des Kraftfahrzeugs und der ermittelten Abmessung der Parklücke eine Fahrtrajektorie ermittelt werden, entlang der das Kraftfahrzeug ausgehend von dem Startpunkt in die Parklücke eingeparkt werden kann. Der Startpunkt kann den Punkt beschreiben, ab dem das Einparken des Kraftfahrzeugs entlang der Fahrtrajektorie beim Vorbeifahren an der Parklücke erstmals möglich ist.

Der vorliegenden Erfindung liegt die Erkenntnis zugrunde, dass es dem Fahrer üblicherweise nicht klar ist, wie weit er sein Kraftfahrzeug an der Parklücke vorbeibewegen soll, um die Startposition zu erreichen. Dies führt oft dazu, dass der Fahrer erst weit nach der Parklücke anhält, um den Einparkvorgang zu starten. Vorliegend wird dem Fahrer eine Information ausgegeben, welche die Startposition beschreibt. Die Ausgabe kann beispielsweise über eine entsprechende Benutzerschnittstelle des Kraftfahrzeugs erfolgen. So kann dem Fahrer noch während des Vorbeifahrens an der Parklücke eine Information über die Lage der Startposition ausgegeben werden. Somit kann der Fahrer bereits während des Vorbeifahrens an der Parklücke sein Fahrverhalten entsprechend anpassen. Auf diese Weise kann der Einparkvorgang für den Fahrer komfortabler gestaltet werden.

Weiterhin hat es sich als vorteilhaft erwiesen, wenn eine Position des Kraftfahrzeugs während des Vorbeibewegens des Kraftfahrzeugs an der Parklücke fortlaufend ermittelt wird und ein Abstand zwischen der ermittelten Position des Kraftfahrzeugs und der ermittelten Startposition fortlaufend bestimmt wird. Mit anderen Worten wird kontinuierlich der verbleibende Weg bis zur Startposition ermittelt. Somit kann kontinuierlich ermittelt werden, wie weit es noch bis zur Startposition ist. Dabei kann die Position des Kraftfahrzeugs insbesondere relativ zu der Parklücke erfasst werden. Weiterhin kann die Eigenbewegung des Kraftfahrzeugs bestimmt werden. Die Position und/oder die Eigenbewegung des Kraftfahrzeugs können mittels Odometrie bestimmt werden. Hierzu kann der aktuelle Lenkwinkel des Kraftfahrzeugs mittels eines Lenkwinkelsensors oder anhand einer Position einer Spurstange bestimmt werden. Alternativ oder zusätzlich können Weginformationen der jeweiligen Räder mit Hilfe entsprechender Radsensoren erfasst werden, welche sogenannte Weggeberimpulse bereitstellen und somit die Anzahl von Umdrehungen beziehungsweise die Radgeschwindigkeit messen. Auf diese Weise kann die Position des Kraftfahrzeugs beziehungsweise die zurückgelegte Fahrstrecke des Kraftfahrzeugs zuverlässig bestimmt werden.

Dabei wird die zumindest eine Information die ermittelte Position und/oder der bestimmte Abstand an den Fahrer ausgegeben. Die ermittelte Position und/oder der bestimmte Abstand kann insbesondere visuell und/oder akustisch und/oder haptisch an den Fahrer ausgegeben werden. Dem Fahrer kann die ermittelte Startposition und/oder der Abstand zu der Startposition auf einer Anzeigeeinrichtung des Kraftfahrzeugs angezeigt werden. Des Weiteren kann es vorgesehen sein, dass dem Fahrer der Abstand zu dem Startpunkt akustisch über eine entsprechende Ansage oder ein Signal ausgegeben wird. Weiterhin können entsprechende Sensoren im Lenkrad dazu verwendet werden, an den Fahrer ein haptisches Signal auszugeben, durch welches er über den Abstand zu dem Startpunkt informiert wird. Auf diese Weise kann dem Fahrer der Startpunkt und insbesondere der Abstand zu dem Startpunkt zuverlässig mitgeteilt werden.

Weiterhin ist es vorteilhaft, wenn der bestimmte Abstand in Form einer Balkenanzeige auf einer Anzeigeeinrichtung des Kraftfahrzeugs angezeigt wird. Die Anzeigeeinrichtung kann einen entsprechenden Bildschirm bzw. ein Display umfassen. Eine solche Balkenanzeige kann sich beispielsweise in Abhängigkeit von dem Restabstand zu der Startposition kontinuierlich verringern oder es kann vorgesehen sein, dass die Größe des Balkens konstant bleibt, während sich beispielsweise eine Füllung des Balkens in Abhängigkeit von dem Abstand verringert. Alternativ oder zusätzlich kann es auch vorgesehen sein, dass der Abstand als Klartext bzw. als Zahlenwert auf der Anzeigeeinrichtung angezeigt wird. Auf diese Weise kann der Fahrer zuverlässig über den Abstand zu dem Startpunkt informiert werden.

Es wird eine Parklückenart bestimmt, welche beschreibt, ob die Parklücke zum Längsparken oder zum Querparken vorgesehen ist und die Startposition wird zusätzlich in Abhängigkeit von der bestimmten Parklückenart ermittelt. In Abhängigkeit von der Parklückenart ergeben sich unterschiedliche Startpositionen zum Einparken in die Parklücke. Dabei kann auch berücksichtigt werden, ob rückwärts oder vorwärts in die Parklücke eingeparkt werden soll. Somit kann die Startposition präzise bestimmt werden.

In einer bevorzugten Ausführungsform wird die zumindest eine Information vor einem Erreichen der Startposition an den Fahrer ausgegeben. Die Startposition wird insbesondere noch während des Vorbeifahrens des Kraftfahrzeugs an der Parklücke bestimmt bzw. berechnet. Noch bevor der Fahrer die Startposition erreicht, kann diese dem Fahrer ausgegeben werden. Auf diese Weise kann zuverlässig verhindert werden, dass der Fahrer erst weit nach der Parklücke anhält, um den Einparkvorgang zu starten. Dabei kann es auch vorgesehen sein, dass die Startposition dem Fahrer auch weiterhin angezeigt wird, falls er bereits an der ermittelten Startposition vorbeigefahren ist.

Bevorzugt wird auf der Anzeigeeinrichtung zusätzlich ein Kraftfahrzeugsymbol, welches das Kraftfahrzeug symbolisiert, und/oder ein Parklückensymbol, welches die Parklücke symbolisiert angezeigt. Darüber hinaus kann es auch vorgesehen sein, dass Symbole, welche Objekte symbolisieren, die die Parklücke begrenzen, auf der Anzeigeeinrichtung angezeigt werden. Beispielsweise kann das Kraftfahrzeugsymbol und das Parklückensymbol in einer Vogelperspektive angezeigt werden. Somit kann der Fahrer auf einfache Weise über die aktuelle Position des Kraftfahrzeugs bezüglich der Parklücke und bezüglich des Startpunkts informiert werden.

In einer weiteren Ausgestaltung wird beim Vermessen der Parklücke eine Länge und/oder eine Tiefe der Parklücke ermittelt. Zum Vermessen der Parklücke wird zumindest ein Abstandssensor verwendet. Bevorzugt können mehrere Abstandssensoren verwendet werden, die gleichmäßig an der Außenfläche des Kraftfahrzeugs verteilt angeordnet ist. Der Abstandssensor kann beispielsweise als Ultraschallsensor, als Radarsensor, als Lasersensor oder dergleichen ausgebildet sein. Somit können die räumlichen Abmessungen der Parklücke zuverlässig ermittelt werden.

Bevorzugt wird anhand der ermittelten Position des Kraftfahrzeugs eine relative Lage des Kraftfahrzeugs zu der Parklücke bestimmt und die Startposition wird zusätzlich in Abhängigkeit von der bestimmten relativen Lage ermittelt. Darüber hinaus können zum Bestimmen der Startposition die Abmessungen des Kraftfahrzeugs berücksichtigt werden, die beispielsweise in einer Speichereinrichtung hinterlegt sind. Auf diese Weise kann die Startposition genau ermittelt werden.

Weiterhin ist es vorteilhaft, wenn ein Lenkeinschlag des Kraftfahrzeugs bestimmt wird und die Startposition zusätzlich in Abhängigkeit von dem bestimmten Lenkeinschlag ermittelt wird. Zu diesem Zweck kann beispielsweise das Signal eines Lenkwinkelsensors ausgewertet werden. Somit kann ermittelt werden, wie das Kraftfahrzeug beim Vorbeifahren an der Parklücke bewegt wird. Somit kann die aktuelle Position des Kraftfahrzeugs und somit die Startposition zuverlässiger und genauer ermittelt werden.

In einer weiteren Ausführungsform wird eine Fahrtrajektorie zum Bewegen des Kraftfahrzeugs ausgehend von der ermittelten Startposition in die Parklücke ermittelt und das Kraftfahrzeug wird zumindest semi-autonom entlang der ermittelten Fahrtrajektorie in die Parklücke bewegt. Wenn das Kraftfahrzeug die Startposition erreicht hat, kann das Kraftfahrzeug entlang der bestimmten Fahrtrajektorie in die Parklücke eingeparkt werden.

Dies kann semi-autonom erfolgen. In diesem Fall übernimmt beispielsweise ein Fahrerassistenzsystem den Lenkeingriff und der Fahrer betätigt das Gaspedal und die Bremse. Alternativ dazu kann das Kraftfahrzeug vollautonom eingeparkt werden. In diesem Fall übernimmt beispielsweise das Fahrerassistenzsystem zusätzlich zu dem Lenkeingriff auch eine Ansteuerung einer Antriebseinrichtung und einer Bremseinrichtung des Kraftfahrzeugs. Somit kann dem Fahrer das Einparken erleichtert werden.

Ein erfindungsgemäßes Fahrerassistenzsystem umfasst eine Steuereinrichtung, welches zum Durchführen eines erfindungsgemäßen Verfahrens ausgelegt ist. Das Fahrerassistenzsystem kann darüber hinaus zumindest einen Abstandssensor umfassen, mit dem die Parklücke vermessen werden kann.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweiligen angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Dabei zeigen:
- Fig. 1: in schematischer Darstellung ein Kraftfahrzeug gemäß einer Ausführungsform der Erfindung;
- Fig. 2: eine Anzeige einer Anzeigevorrichtung des Kraftfahrzeugs, die während einer Suche einer Parklücke angezeigt wird, gemäß dem Stand der Technik;
- Fig. 3: eine Anzeige gemäß Fig. 2, die nach dem Auffinden einer Parklücke angezeigt wird;
- Fig. 4: eine Anzeige gemäß Fig. 2, die beim Erreichen einer Startposition angezeigt wird; und
- Fig. 5: eine Anzeige der Anzeigevorrichtung, bei der ein Abstand zu der Startposition mittels einer Balkenanzeige dargestellt wird.

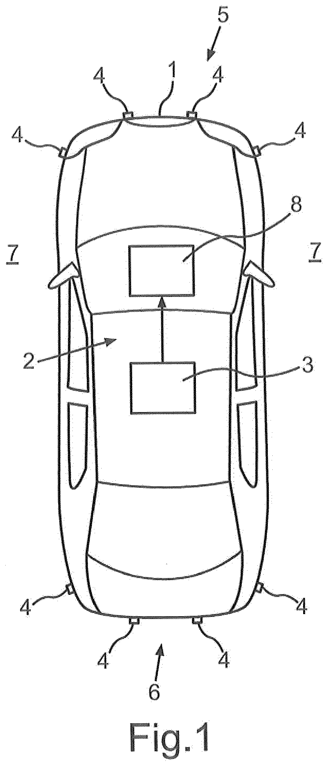

Fig. 1 zeigt ein Kraftfahrzeug 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, die beispielsweise durch ein Steuergerät des Kraftfahrzeugs 1 gebildet sein kann. Des Weiteren umfasst das Fahrerassistenzsystem 2 zumindest einen Abstandssensor 4.

In dem vorliegenden Ausführungsbeispiel umfasst das Fahrerassistenzsystem 2 acht Abstandssensoren 4. Dabei sind vier Abstandssensoren 4 in einem Frontbereich 5 des Kraftfahrzeugs 1 und vier Abstandssensoren 4 in einem Heckbereich 6 des Kraftfahrzeugs 1 angeordnet. Die Abstandssensoren 4 sind insbesondere dazu ausgebildet, ein Objekt in einem Umgebungsbereich 7 des Kraftfahrzeugs 1 zu erfassen. Des Weiteren können die Abstandssensoren 4 insbesondere dazu ausgelegt sein, einen Abstand zu einem Objekt in dem Umgebungsbereich 7 des Kraftfahrzeugs 1 zu erfassen. Die Abstandssensoren können beispielsweise als Ultraschallsensoren, Radarsensoren, Laserscanner oder dergleichen ausgebildet sein. Weiterhin kann es auch vorgesehen sein, dass weitere Abstandssensoren beispielsweise an einem äußeren Seitenbereich des Kraftfahrzeugs 1 angeordnet sind.

Darüber hinaus umfasst das Kraftfahrzeug 1 eine Anzeigeeinrichtung 8, die als Bildschirm bzw. als Display ausgebildet sein kann, und die im Innenraum des Kraftfahrzeugs 1 angeordnet ist. Die Steuereinrichtung 3 ist mit den Abstandssensoren 4 zur Datenübertragung verbunden. Entsprechende Datenleitungen sind vorliegend der Übersichtlichkeit halber nicht dargestellt. Darüber hinaus ist die Steuereinrichtung 3 mit der Anzeigeeinrichtung 8 zur Datenübertragung verbunden. Somit kann die Anzeige auf der Anzeigeeinrichtung 8 mittels der Steuereinrichtung 3 gesteuert werden.

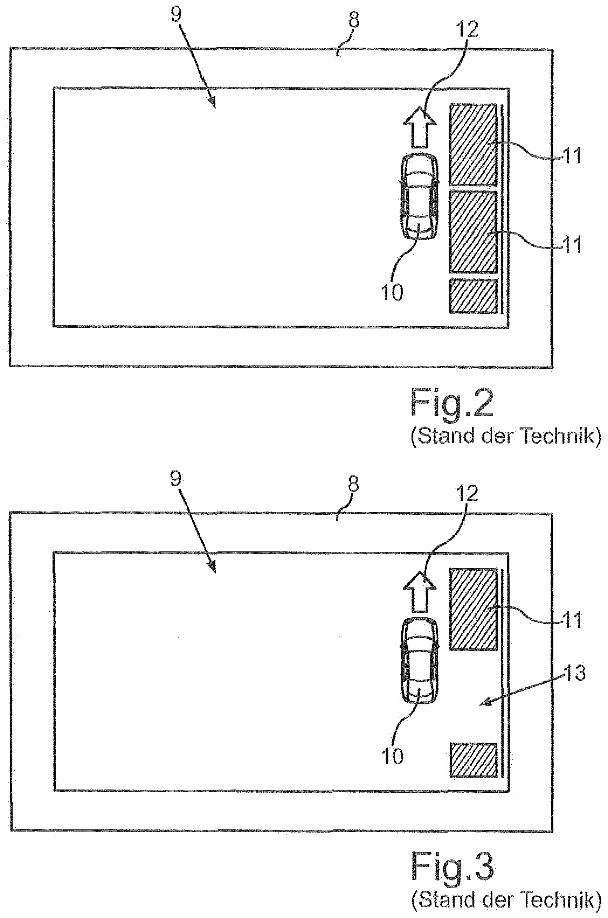

Während der Fahrt entlang der Stellplatzreihe erfassen die Abstandssensoren 4 und insbesondere die Abstandssensoren 4, die im Bereich der Seitenflanken des Kraftfahrzeugs 1 angeordnet sind, die Stellplatzreihen kontinuierlich auf freie Parkplätze. Fig. 2 zeigt eine Anzeige 9 gemäß dem Stand der Technik, die auf der Anzeigeeinrichtung 8 des Kraftfahrzeugs 1 dargestellt wird. Während der Suche einer Parklücke bzw. eines freien Stellplatzes wird das Kraftfahrzeug 1 an einer Stellplatzreihe vorbeibewegt. Das Kraftfahrzeug 1 fährt also an parkenden Kraftfahrzeugen vorbei. In diesem Fall wird dem Fahrer auf der Anzeigeeinrichtung 8 eine Anzeige 9 dargestellt, auf der ein Kraftfahrzeugsymbol 10 gezeigt ist.

Das Kraftfahrzeugsymbol 10 symbolisiert das Kraftfahrzeug 1. Darüber hinaus werden auf der Anzeige 9 weitere Symbole 11 gezeigt, die in der Stellplatzreihe angeordnet sind. Diese Symbole 11 können beispielsweise parkende Kraftfahrzeuge symbolisieren, die auf den Stellplätzen der Stellplatzreihe geparkt sind. Das Kraftfahrzeugsymbol 10 und die Symbole 11 werden auf der Anzeigeeinrichtung 8 in einer Vogelperspektive dargestellt. Darüber hinaus wird dem Fahrer auf der Anzeige 9 ein Pfeil 12 angezeigt, welcher dem Fahrer verdeutlichen soll, dass er weiterfahren soll, da noch keine Parklücke aufgefunden wurde.

Fig. 3 zeigt eine Anzeige 9 gemäß dem Stand der Technik, die dem Fahrer auf der Anzeigeeinrichtung 8 dargestellt wird, falls ein freier Stellplatz aufgefunden wurde. In diesem Fall wird auf der Anzeige 9 ein Parklückensymbol 13 angezeigt, das einen freien Stellplatz bzw. eine Parklücke symbolisiert. Das Parklückensymbol 13 ist vorliegend als freie Fläche dargestellt. Auch in diesem Fall wird der Pfeil 12 auf der Anzeige angezeigt, da der Fahrer dadurch aufgefordert werden soll, weiter zu fahren.

Während des Vorbeifahrens des Kraftfahrzeugs 1 an der Parklücke wird eine Startposition zum Einparken des Kraftfahrzeugs 1 in die Parklücke berechnet. Zu diesem Zweck werden die Abmessungen der Parklücke berücksichtigt, die mit den Abstandssensoren 4 ermittelt werden. Darüber hinaus können die Abmessungen des Kraftfahrzeugs 1 berücksichtigt werden, die beispielsweise in einer Speichereinrichtung der Steuereinrichtung 3 hinterlegt sind. Des Weiteren kann die Position des Kraftfahrzeugs 1 relativ zu der Parklücke ermittelt werden. Zu diesem Zweck kann auch ein aktueller Lenkeinschlag des Kraftfahrzeugs 1 berücksichtigt werden, der beispielsweise mit einem Lenkwinkelsensor ermittelt wird.

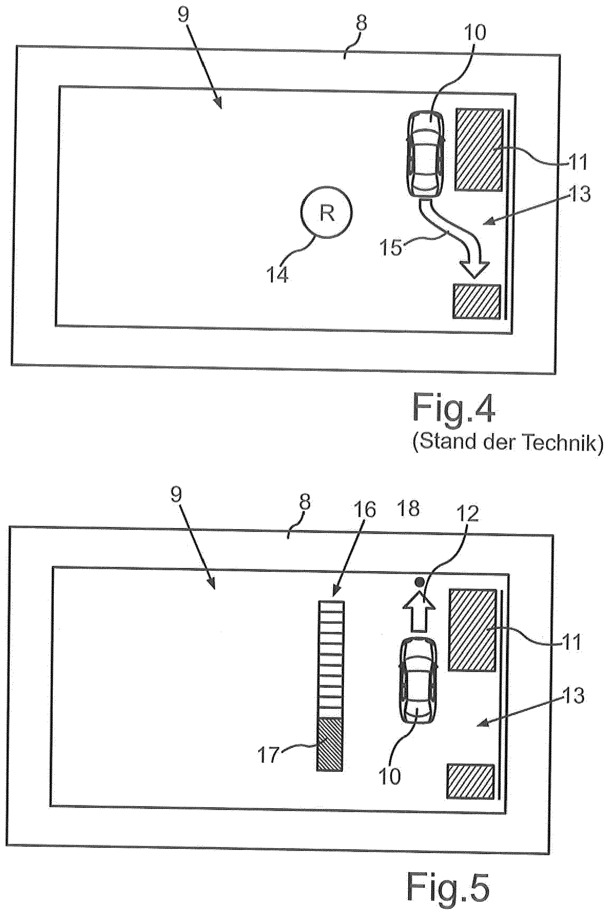

Fig. 4 zeigt eine Anzeige 9 gemäß dem Stand der Technik, die dem Fahrer auf der Anzeigeeinrichtung 8 dargestellt wird, falls die Startposition erreicht ist. In diesem Fall ist auf der Anzeige 9 zusätzlich ein Rückfahrsymbol 14 angezeigt, welches den Fahrer auffordern soll, rückwärts zu fahren. Des Weiteren wird auf der Anzeige 9 ein Pfeil 15 angezeigt, der die Fahrtrajektorie, entlang welcher das Kraftfahrzeug 1 ausgehend von der Startposition in die Parklücke eingeparkt wird symbolisiert.

Das Problem bei dem Anzeigekonzept gemäß dem Stand der Technik, also der Anzeigen 9 gemäß der Figuren 2 bis 4 liegt darin, dass dem Fahrer nicht klar ist, wie weit er zwischen dem Darstellen der Anzeige 9 gemäß Fig. 3 und der Anzeige 9 gemäß Fig. 4 fahren soll. Erst wenn dem Fahrer die Anzeige 9 gemäß Fig. 4 angezeigt wird, weiß er, dass er das Kraftfahrzeug 1 anhalten soll, um den Einparkvorgang zu starten. Hierbei ergibt sich oft das Problem, dass der Fahrer mit dem Kraftfahrzeug 1 sich in Folge der plötzlichen Anzeige gemäß Fig. 4 weit von der Parklücke entfernt. Schon bei mittleren Geschwindigkeiten von beispielsweise 7 km/h legt das Kraftfahrzeug 1 beispielsweise 2 m/s zurück. Dies führt dazu, dass der Fahrer erst weit nach der Parklücke anhält, um einzuparken.

Gemäß einer Ausführungsform der vorliegenden Erfindung ist es vorgesehen, dass bereits während dem Vorbeifahren des Kraftfahrzeugs 1 an der Parklücke die Startposition für den Einparkvorgang berechnet wird. Dabei kann die Startposition derart gewählt werden, dass das Kraftfahrzeug beispielsweise ausgehend von der Startposition in einem Zug in die Parklücke eingeparkt werden kann. Alternativ dazu kann die Startposition auch derart gewählt werden, dass das Kraftfahrzeug 1 in mehreren Zügen in die Parklücke eingeparkt wird. Auch während des Vorbeifahrens des Kraftfahrzeugs 1 an der Parklücke wird dem Fahrer eine Information, die die Startposition beschreibt, ausgegeben. Dies ist in Fig. 5 dargestellt.

Die Anzeige 9 gemäß Fig. 5 zeigt zudem eine Balkenanzeige 16, die den Abstand des Kraftfahrzeugs 1 zu dem Startpunkt beschreibt. In dem vorliegenden Ausführungsbeispiel wird beispielsweise eine Füllung 17 der Balkenanzeige 16 kontinuierlich erhöht je näher das Kraftfahrzeug 1 zu der Startposition gelangt. Der Abstand des Kraftfahrzeugs 1 zu der Startposition kann beispielsweise von einem Referenzpunkt des Kraftfahrzeugs 1 aus berechnet werden. Als Referenzpunkt kann beispielsweise die Hinterachse bzw. ein Mittelpunkt der Hinterachse des Kraftfahrzeugs 1 dienen. In dem vorliegenden Ausführungsbeispiel wird dem Fahrer auf der Anzeige 9 ein Startpunktsymbol angezeigt, welches die Position des Startpunkts beschreibt. Somit kann der Fahrer zuverlässig beim Einparken des Kraftfahrzeugs in die Parklücke unterstützt werden.

Des Weitern kann es auch vorgesehen sein, dass die Balkenanzeige 16 während des Einparken des Kraftfahrzeugs 1 in die Parklücke dem Fahrer den verbleibenden Abstand bis zum Ende der Fahrtrajektorie anzeigt. Damit kann dem Fahrer während des Einparkens angezeigt werden, wie lange er noch in die entsprechende Richtung fahren soll.

## Patentansprüche

1. Verfahren zum Unterstützen eines Fahrers eines Kraftfahrzeugs (1) beim Einparken, bei welchem das Kraftfahrzeug (1) an einer Parklücke vorbei bewegt wird und während des Vorbeibewegens des Kraftfahrzeugs (1) an der Parklücke Sensordaten zumindest eines Abstandssensors (4) des Kraftfahrzeugs (1) bereitgestellt werden, die Parklücke anhand der bereitgestellten Sensordaten vermessen wird und eine Startposition für einen Einparkvorgang in die Parklücke anhand der Vermessung der Parklücke ermittelt wird,
wobei während des Vorbeibewegens des Kraftfahrzeugs (1) an der Parklücke zumindest eine die Startposition beschreibende Information an den Fahrer ausgeben wird,
**wobei**
eine Position des Kraftfahrzeugs (1) während des Vorbeibewegens des Kraftfahrzeugs (1) an der Parklücke fortlaufend ermittelt wird und ein Abstand zwischen der ermittelten Position des Kraftfahrzeugs (1) und der ermittelten Startposition fortlaufend bestimmt wird, wobei als die zumindest eine Information die ermittelte Startposition und/oder der bestimmte Abstand an den Fahrer ausgegeben wird, wobei der bestimmte Abstand in Form einer Balkenanzeige (16) auf einer Anzeigeeinrichtung (8) des Kraftfahrzeugs (1) angezeigt wird,
**dadurch gekennzeichnet, dass**
eine Parklückenart bestimmt wird, welche beschreibt, ob die Parklücke zum Längsparken oder zum Querparken vorgesehen ist, und die Startposition zusätzlich in Abhängigkeit von der bestimmten Parklückenart ermittelt wird.

2. Verfahren nach Anspruch 1,
**dadurch gekennzeichnet, dass**
die zumindest eine Information vor einem Erreichen der Startposition an den Fahrer ausgegeben wird.

3. Verfahren nach Anspruch 1,
**dadurch gekennzeichnet, dass**
auf der Anzeigeeinrichtung (8) zusätzlich Kraftfahrzeugsymbol (10), welches das Kraftfahrzeug (1) symbolisiert, und/oder ein Parklückensymbol (13), welches die Parklücke symbolisiert, angezeigt wird.

4. Verfahren nach einem der vorhergehenden Ansprüche,
**dadurch gekennzeichnet, dass**
beim Vermessen der Parklücke eine Länge und/oder eine Tiefe der Parklücke ermittelt wird.

5. Verfahren nach einem der vorhergehenden Ansprüche,
**dadurch gekennzeichnet, dass**
anhand der ermittelten Position des Kraftfahrzeugs (1) eine relative Lage des Kraftfahrzeugs (1) zu der Parklücke bestimmt wird und die Startposition zusätzlich in Abhängigkeit von der bestimmten relativen Lage ermittelt wird.

6. Verfahren nach einem der vorhergehenden Ansprüche,
**dadurch gekennzeichnet, dass**
ein aktueller Lenkeinschlag des Kraftfahrzeugs (1) bestimmt wird und die Startposition zusätzlich in Abhängigkeit von dem bestimmten Lenkeinschlag ermittelt wird.

7. Verfahren nach einem der vorhergehenden Ansprüche,
**dadurch gekennzeichnet, dass**
eine Fahrtrajektorie zum Bewegen des Kraftfahrzeug (1) ausgehend von der ermittelten Startposition in die Parklücke ermittelt wird und das Kraftfahrzeug (1) zumindest semi-autonom entlang einer ermittelten Fahrtrajektorie in die Parklücke bewegt wird.

8. Fahrerassistenzsystem (2) mit einer Steuereinrichtung (3), die zum Durchführen eines Verfahrens nach einem der vorhergehenden Ansprüche ausgelegt ist.

9. Kraftfahrzeug (1) mit einem Fahrerassistenzsystem (2) nach Anspruch 8.

## Claims

1. Method for assisting a driver of a motor vehicle (1) when parking, in which method the motor vehicle (1) is moved past a parking space, and sensor data of at least one distance sensor (4) of the motor vehicle (1) are made available while the motor vehicle (1) moves past the parking space, the parking space is measured on the basis of the sensor data made available, and a starting position for a parking process into the parking space is identified on the basis of the measurement of the parking space,
wherein while the motor vehicle (1) moves past the parking space at least one information item which describes the starting position is output to the driver,
**wherein**
a position of the motor vehicle (1) while the motor vehicle (1) moves past the parking space is identified continuously, and a distance between the identified position of the motor vehicle (1) and the identified starting position is determined continuously,
wherein the identified starting position and/or the determined distance are/is output as the at least one information item to the driver, wherein the determined distance is displayed in the form of a bar display (16) on a display device (8) of the motor vehicle (1),
**characterized in that**
a type of parking space is determined which describes whether the parking space is provided for longitudinal parking or for transverse parking, and the starting position is additionally identified as a function of the determined type of parking space.

2. Method according to Claim 1,
**characterized in that**
the at least one information item is output to the driver before the starting position is reached.

3. Method according to Claim 1,
**characterized in that**
a motor vehicle symbol (10) which symbolizes the motor vehicle (1) and/or a parking space symbol (13) which symbolizes the parking space are/is additionally displayed on the display device (8).

4. Method according to one of the preceding claims,
**characterized in that**
when the parking space is measured a length and/or a depth of the parking space are/is identified.

5. Method according to one of the preceding claims,
**characterized in that**
a relative position of the motor vehicle (1) with respect to the parking space is determined on the basis of the identified position of the motor vehicle (1), and the starting position is additionally identified as a function of the determined relative position.

6. Method according to one of the preceding claims,
**characterized in that**
a current steering lock of the motor vehicle (1) is determined, and the starting position is additionally identified as a function of the determined steering lock.

7. Method according to one of the preceding claims,
**characterized in that**
a travel trajectory for moving the vehicle (1) from the identified starting position into the parking space is identified, and the motor vehicle (1) is moved at least semi-autonomously into the parking space along an identified travel trajectory.

8. Driver assistance system (2) having a control device (3) which is configured to carry out a method according to one of the preceding claims.

9. Motor vehicle (1) having a driver assistance system (2) according to Claims 8.

## Revendications

1. Procédé d'assistance d'un conducteur d'un véhicule automobile (1) lors de l'entrée en stationnement, selon lequel le véhicule automobile (1) passe à côté d'un emplacement de stationnement et, pendant le passage du véhicule automobile (1) à côté de l'emplacement de stationnement, des données de capteur d'au moins un capteur d'écart (4) du véhicule automobile (1) sont fournies, l'emplacement de stationnement est mesuré à l'aide des données de capteur fournies et une position de départ pour une manoeuvre d'entrée en stationnement dans l'emplacement de stationnement est déterminée à l'aide du mesurage de l'emplacement de stationnement,
au moins une information qui décrit la position de départ étant délivrée à l'attention du conducteur pendant le passage du véhicule automobile (1) à côté de l'emplacement de stationnement,
une position du véhicule automobile (1) pendant le passage du véhicule automobile (1) à côté de l'emplacement de stationnement étant continuellement déterminée et un écart entre la position déterminée du véhicule automobile (1) et la position de départ déterminée étant continuellement déterminé, l'au moins une information délivrée à l'attention du conducteur étant la position de départ déterminée et/ou l'écart déterminé, l'écart déterminé étant affiché sous la forme d'un affichage de barres (16) sur un dispositif d'affichage (8) du véhicule automobile (1),
**caractérisé en ce que**
le type d'emplacement de stationnement est déterminé, lequel décrit si l'emplacement de stationnement est conçu pour un stationnement longitudinal ou un stationnement transversal, et la position de départ est en plus déterminée en fonction du type d'emplacement de stationnement déterminé.

2. Procédé selon la revendication 1, **caractérisé en ce que** l'au moins une information est délivrée à l'attention du conducteur avant d'atteindre la position de départ.

3. Procédé selon la revendication 1, **caractérisé en ce qu'**un symbole de véhicule automobile (10) qui symbolise le véhicule automobile (1) et/ou un symbole d'emplacement de stationnement (13) qui symbolise l'emplacement de stationnement sont en plus affichés sur le dispositif d'affichage (8).

4. Procédé selon l'une des revendications précédentes, **caractérisé en ce qu'**une longueur et/ou une profondeur de l'emplacement de stationnement sont déterminées lors du mesurage de l'emplacement de stationnement.

5. Procédé selon l'une des revendications précédentes, **caractérisé en ce qu'**une position relative du véhicule automobile (1) par rapport à l'emplacement de stationnement est déterminée à l'aide de la position déterminée du véhicule automobile (1) et la position de départ est en plus déterminée en fonction de la position relative déterminée.

6. Procédé selon l'une des revendications précédentes, **caractérisé en ce qu'**un braquage de direction actuel du véhicule automobile (1) est déterminé et la position de départ est en plus déterminée en fonction du braquage de direction déterminé.

7. Procédé selon l'une des revendications précédentes, **caractérisé en ce qu'**une trajectoire de conduite pour le déplacement du véhicule automobile (1) à partir de la position de départ déterminée dans l'emplacement de stationnement est déterminée et le véhicule automobile (1) est déplacé dans l'emplacement de stationnement au moins en semi-autonomie le long de la trajectoire de déplacement déterminée.

8. Système d'assistance au conducteur (2) comprenant un dispositif de commande (3) qui est conçu pour mettre en oeuvre un procédé selon l'une des revendications précédentes.

9. Véhicule automobile (1) équipé d'un système d'assistance au conducteur (2) selon la revendication 8.
